# EUROPEAN PATENT SPECIFICATION

(11) **EP 2 395 844 B1**
(45) Date of publication and mention of the grant of the patent: **01.08.2018**
(21) Application number: 10702701.3
(22) Date of filing: 08.02.2010
(51) Int. Cl.: A21D 13/062, A23L 7/10, A23L 33/20, A21D 6/00

(54) **BAKED DOUGH INCLUDING A SPECIFIC FLOUR**
GEBACKENER TEIG, DER EIN BESTIMMTES MEHL ENTHÄLT
PÂTE À PAIN CUITE AU FOUR CONTENANT UNE FARINE SPÉCIFIQUE

(30) Priority: 11.02.2009 FR 0950865
(43) Date of publication of application: 21.12.2011
(73) Proprietor: Generale Biscuit, 92140 Clamart (FR)
(72) Inventor: MOREIRA DE ALMEIDA, Isabel, F-78730 Saint Arnoult-en-yvelines (FR); WAHL, Robin, F-91430 Igny (FR); BELOUIN, François, F-91590 Cerny (FR)
(74) Representative: Cabinet Plasseraud
(86) International application number: PCT/EP2010/051509
(87) International publication number: WO 2010/092023

(56) References cited:
- EP-A- 0 459 551
- CA-A1- 2 141 974
- FR-A- 2 769 471
- FR-A- 2 842 991
- US-A- 1 499 986
- US-A- 3 974 298
- US-A- 4 781 938

## Description

This invention relates to a baked dough, in particular a cereal dough, having a water activity greater than 0.6 and including at least a flour having a median particle size by volume smaller than or equal to 40 µm, wherein said flour excludes whole wheat flour in which the bran and the germ are not removed, and has a damaged starch content less than or equal to 6% by weight, with respect to the total weight of the dry matter of flour content, and wherein the baked dough has a sugar and/or sugar derivatives content between 15% and 25% by weight, with respect to the total weight of the dough. Sugars are essential constituent in the development of food products, in particular baked pastry doughs. In addition to their sweetening properties, sugars play an important role in the texture and organoleptic properties of the food products to which they are added.

However, excessive sugar in the blood can lead to cardiovascular disorders, obesity or diabetes. In addition, in the context of a balanced diet, nutritionists often recommend limiting the consumption of sugars. It is therefore beneficial, in order to improve the nutritional profiles of certain sweet foods such as baked doughs for pastry products, to minimize their sugar content.

From this perspective, it has been envisaged, for example, to substitute sugars with lipids, i.e. fats. The food products thus obtained have organoleptic and textural properties similar to the sweet products that they are intended to replace, but their nutritional profile is substantially impaired by the introduction of these fats.

Polyols have also been proposed as an alternative to sugars due to their sweetening activity and their ability to generate a lower glycemic response than sugars. However, to obtain gustatory and textural properties comparable to those obtained with sugars, the polyols must be introduced in a large amount, thus again impairing the nutritional benefit expected due to the replacement of the sugars. Moreover, the introduction of polyols in high amounts can lead to notable adverse effects on digestion, in particular laxative effects.

Finally, another solution envisaged has been to replace sugars with cereals, in particular flour. However, the addition of flour in the doughs of soft products such as pastry products leads to an increase in the viscosity of the dough and impairs the proper development of the final product.

In addition, the solutions proposed until now for replacing sugars in doughs involve unacceptable textural modifications, in particular increasing the viscosity of the dough and reducing the soft properties (in particular characterized by an airy, light and elastic structure) of the final product obtained. CA 2 141 974 A1 relates to ultra-fine whole wheat flours which have been milled to an unusually small particle size to eliminate or minimize processing and organoleptic problems associated with conventional whole wheat flours.

GB 1 499 986 A and US 3 974 298 A intend to substitute chlorinated flour in high ratio cakes with a flour having a median particulate size less than 40 microns.

EP 0 459 551 A describes an improved flour having a small particle size for baking purposes, in particular used in non-sweet puff pastry. There is therefore a need for baked dough, in particular pastries, i.e. having a water activity greater than 0.6, and a reduced sugar content, while preserving the organoleptic and textural properties of sweet products.

The inventors have shown that it was possible to solve the aforementioned problem by substituting sugars with a specific flour, in particular having a median particle size by volume smaller than or equal to 40 µm.

In addition, this invention relates, according to a first aspect, to a baked dough according to claim 1. The invention also relates, according to a second aspect, to a food product including at least one baked dough as defined above.

The invention also relates, according to a third aspect, to the use of a flour having a median particle size by volume smaller than or equal to 40 µm in order to replace the sugars and/or sugar derivatives in the baked doughs or doughs intended to be baked. A process of manufacturing baked dough comprising powdery components and liquid components is described, the process comprising the steps of:
(a) mixing the dough constituents by
   (i) mixing the powdery components;
   (ii) subsequently adding the liquid components; and
(b) forming the dough and oven baking the obtained formed backed dough, the improvement comprising substituting, in step (a) (i), at least a part of the sugars with a flour having a median particulate size in volume less than or equal to 40 µm, wherein the baked dough nutritional profile is improved.

The process may optionally comprise a further step (a) (iii) of adding larger solid additional components, such as oat flakes, fruit drops, cereal crisps, after the addition of the liquid components.

In addition, before the forming step (b), the dough may be left at rest between 15 min and 2h. A process of manufacturing baked dough comprising powdery components and liquid components is described, the process comprising the steps of:
(a) mixing the dough constituents by
   (i) mixing the powdery components;
   (ii) subsequently adding the liquid components; and
(b) forming the dough and oven baking the obtained formed backed dough, the improvement comprising substituting, in step (a) (i), at least a part of the sugars with a flour having a median particulate size in volume less than or equal to 40 µm, wherein the amount of calories in the baked dough is reduced."

The process may optionally comprise a further step (a) (iii) of adding larger solid additional components, such as oat flakes, fruit drops, cereal crisps, after the addition of the liquid components.

In addition, before the forming step (b), the dough may be left at rest for 10 minutes to 2 hours.

The powdery components include flour, powder sugar or solid sugar derivatives, salt, evaporated milk, cereals, dietary fibers, emulsifiers, powdery aromas and leavening agents such as baking soda.

The liquid components include water, eggs, liquid sugar derivatives, fats, liquid aromas and colorants.

### Baked dough

By "baked dough", we mean, in the sense of this application, a dough having been subjected to at least one baking step sufficient to enable partial gelatinisation of the starch that it contains.

In its native, i.e. unbaked, state, starch has a semi-crystalline structure. After a heat treatment such as a baking step, optionally in the presence of water, the native semi-crystalline structure of the starch is at least partially modified. It is said that the starch is then at least partially gelatinised.

According to a particularly preferred embodiment, the starch present in the baked doughs according to this invention is at least partially, but not totally gelatinised. In other words, the starch present in the baked doughs according to this invention is at least partially gelatinised and at least partially non-gelatinised.

The man of the art knows different techniques for recognizing non-gelatinized starch; the simplest being the observation under a polarized light microscope: non-gelatinized grains appear shaped as a "Maltese cross" (birefringence), whereas gelatinized grains lose this characteristic.

The baking is performed according to practices and uses suitable for the desired finished product. For soft products, the baking is performed in an oven, generally at a temperature of 130 to 220°C for 10 to 20 minutes.

According to a preferred embodiment, the baked doughs according to the invention include at least flour and eggs.

According to a preferred embodiment, the baked doughs according to the invention include at least flour, eggs and sugar.

According to an even more preferred embodiment, the baked doughs according to the invention include at least flour, eggs, additional fats and sugar.

The baked doughs according to the invention are preferably non-fermented, with the exception of baked doughs used in bakery products of which the soft texture is obtained by fermentation.

### Water activity (Aw)

The baked doughs according to the invention have a water activity between 0.6 and 0.80. The water activity is measured on the finished food products, i.e. after baking.

According to a preferred embodiment, the baked doughs according to the invention have a water activity between 0.6 and 0.78, and preferably between 0.65 and 0.75.

According to this invention, the baked doughs with an Aw below 0.6 are no longer considered to be soft products. This concerns in particular cookies or biscuits having textures and organoleptic properties very different from soft products.

On the other hand, the baked doughs having an Aw above 0.80 are products having a limited shelf life, in particular less than 180 days.

The water activity (Aw) of a material is defined as the ratio between the vapor pressure of the water of the material and the vapor pressure of pure water at the same temperature. This concept is well known to a person skilled in the art, who is perfectly aware of the suitable measurement methods.

According to a particularly preferred embodiment, the baked doughs according to the invention have a shelf life capable of reaching up to 180 days, and preferably up to 210 days.

### Water (moisture)

The baked doughs according to the invention can preferably have a residual hydration corresponding to a water content in the finished product greater than 5% by weight, with respect to the total weight of the product, preferably between 5 and 25%, and more preferably between 10 and 25% by weight.

Again, according to this application, baked doughs having a residual hydration corresponding to the water content in the finished product below 5% are no longer considered to be soft, but are qualified as dry biscuits.

### Pastry products

The baked doughs according to the invention are very specifically used in pastry products, preferably non-fermented, with the exception of bakery products of which the soft texture is obtained by fermentation.

In a non-limiting manner, the food products obtained from the baked doughs according to the invention can be cakes, partially or totally stuffed or coated, also capable of including items such as dried fruit, chocolate chips or fruit, or having decorative topping-type surface decorations.

However, the food products obtained from the baked doughs according to the invention do not cover the laminated pastry such as puff pastry, which are well developed finished products, but do not have the soft texture of the products of the invention.

### Flour

Wheat flour is the product developed from ordinary wheat grains, *Triticum aestivum L.* by milling or grinding methods in which the bran and the germ are partially removed and the remainder is reduced to a substantially fine powder.

This excludes whole wheat flour obtained by milling or grinding methods in which the bran and the germ are not removed.

Starch is a polysaccharide with the chemical formula (C₆H₁₀O₅)n. It consists of glucose molecules bound by α (1-4) bonds. It consists of two polysaccharide fractions:
- amylose, which constitutes around 25% of the starch, and which is formed by 600 to 1000 linear-chain glucose molecules;
- amylopectin, which constitutes around 75% of the starch, and which is branched at about every 25 glucose radicals (alpha 1-6 bond).

The starch grain is in the form of semi-crystalline granules.

Granulometry is the study of the distribution of particle sizes of a flour. It is a basic characteristic, in direct relation with all of the grinding and separation unit operations. The median particle size corresponds to the equivalent diameter at which the value of the cumulative distribution is 50%.

The flour used in the baked doughs according to the invention has a median particle size by volume smaller than or equal to 40 µm, i.e. in the sense of this application, more than 50% of the flour volume has a particle size smaller than or equal to 40 µm.

According to a preferred embodiment, more than 80% of the flour used in the baked doughs according to the invention have a size smaller than or equal to 40 µm.

The median particle size by volume is measured in particular by laser diffraction with a Malvern Mastersizer 2000 apparatus combined with a SCIROCCO auto-sampler.

The apparatus measures the volume occupied by each particle. As the particles are not strictly spherical, the apparatus approximates an equivalent sphere acting in the same manner as the particle considered. This is the most common laser diffraction particle size measurement.

According to a preferred embodiment, the flour used in the baked doughs according to the invention has a median particle size by volume between 10 and 40 µm, i.e. in the sense of this application, more than 50% of the volume of the flour has a particle size between 10 and 40 µm.

According to a more preferred embodiment, the flour used in the baked doughs according to the invention has a median particle size by volume between 15 and 40 µm, i.e. in the sense of this application, more than 50% of the volume of the flour has a particle size between 15 and 40 µm. The flour used in the baked doughs according to the invention has a damaged starch content less than or equal to 6% by weight, with respect to the total weight of dry matter of flour, and preferably 3 to 5.5% by weight.

The damaged starch content in the flour can in particular be detected by standardized methods such as the AACC 76-31 method.

The "dry matter of flour" is defined as what is obtained when water is removed from the flour. In this application, the "dry matter of flour" represents at least 85% by weight, with respect to the total weight of the flour, and preferably 85 and 90% by weight.

The damaged starch content is an important criterion in the assessment of the quality of a flour. It has indeed been observed that an excess of damaged starch results in significant water absorption, producing a sticky dough and, to a lesser extent, a low-volume finished product, with little development.

Surprisingly, the use of flours according to the invention with a low damaged starch content enables good development of the finished product and a soft, low-density food to be obtained.

When a soft, low-density finished product is obtained, its texture can be measured with a Tax-T2 penetrometer, by measuring the compression force recorded after 25% compression according to the following protocol:
- Shaving the two sides of the soft biscuit (only if it is not flat)
- Cutting a biscuit cylinder using a cookie cutter having a radius of 20 mm
- The test piece thus obtained is then compressed with the Tax-T2 to 25% compression at a speed of 0.7 mm/sec.

Soft textures for example do not include puff pastries, or any other laminated dougt, which usually develop well, but are not soft food products according to the present invention, as they break immediately when a penetration force is applied. The flour used in the baked doughs according to the invention has a median particle size by volume smaller than or equal to 40 µm and a damaged starch content less than or equal to 6% by weight, with respect to the total weight of the dry matter of flour.

According to a preferred embodiment, the flour used in the baked doughs according to the invention has a protein content less than or equal to 12% by weight, with respect to the total weight of the dry matter of flour, preferably 5 to 12% by weight, and more preferably 6 to 8% by weight.

Without wanting to be bound by any theory, it has been observed that the use of flour having an insufficient protein content, in particular less than 5% by weight with respect to the total weight of the flour, does not enable good development of the finished product, just as the use of a flour with an excessive protein content, in particular above 12% by weight with respect to the total weight of flour, does not at all enable a soft finished product to be developed.

According to a preferred embodiment, the flour used in the baked doughs according to the invention has a fibre content less than or equal to 5% by weight, with respect to the total weight of the dry matter of flour, preferably 2 to 5% by weight, and more preferably 2.5 to 4.5% by weight.

Without wanting to be bound by any theory, it has been observed that the use of flour having an excessive fiber content, in particular above 5% by weight with respect to the total weight of flour, limits the development of a soft finished product.

According to a particularly preferred embodiment, the flour used in the baked doughs according to the invention has a median particle size by volume less than or equal to 40 µm, a damaged starch content less than or equal to 6% by weight, with respect to the total weight of dry matter of flour, and a protein content less than or equal to 12% by weight, with respect to the total weight of dry matter of flour.

Such flours can in particular be obtained by air classification methods. Air classification is a known method of dry fractionation of grains, enabling particles of various sizes to be obtained, pneumatically separated according to their higher or lower protein content or their particle size profile. Starch-rich particles, which are heavier and larger, are separated from protein particles, which are smaller.

Aside from air classification, any other method enabling flours to be obtained with a median particle size by volume less than or equal to 40 µm, and preferably with a damaged starch content less than or equal to 6% by weight, with respect to the total weight of dry matter of flour, and a protein content less than or equal to 12% by weight, with respect to the total weight of dry matter of flour, can be used.

The flours capable of being used in this invention can also be biscuit-baking flours or soft varieties of wheat flours, i.e. with a low hardness, such as North American wheat, ground so as to obtain the desired particle size distribution. However, in a preferred embodiment, the flours of the present invention are not whole-wheat flours obtained by milling or grinding methods in which the bran and the germ are not removed, and reduced in powder.

### Nutritional profile

According to a preferred embodiment, the baked doughs according to the invention have a good nutritional profile, i.e. they include:
- a low sugar content, in particular below 25% by weight, with respect to the total weight of the baked dough,
- a low saturated fat content, i.e. less than 5% by weight, with respect to the total weight of the baked dough,
- a high cereal content, i.e. more than 25% by weight,
- advantageously, a high fiber content, i.e. more than 3% by weight, with respect to the total weight of the baked dough and preferably more than 6% by weight.

In particular, the baked dough according to the invention can preferably include:
- at least one flour having a median particle size by volume less than or equal to 40 µm, a damaged starch content less than or equal to 6% by weight, with respect to the total weight of the flour, and a protein content less than or equal to 12% by weight, with respect to the total weight of the flour,
- less than 25% by weight of sugars and/or sugar derivatives, with respect to the total weight of the baked dough,
- less than 5% by weight of saturated fats, with respect to the total weight of the baked dough,
- more than 25% by weight of cereals, with respect to the total weight of the baked dough,
- advantageously, more than 3% by weight of fiber, with respect to the total weight of the baked dough, and preferably more than 6% by weight.

### Sugars and sugar derivatives

The baked doughs according to the invention have a sugar and/or sugar derivative content between 15% and 25% by weight, with respect to the total weight of the baked dough.

The term sugar means, in the sense of this application, any monosaccharide such as, in particular, glucose, dextrose, fructose, galactose, mannose, or any disaccharide such as sucrose, lactose or maltose, conferring a sweet flavor on the food in which they are introduced.

According to a preferred embodiment, the sugars introduced into the baked doughs according to the invention can be chosen in particular from sucrose, glucose, fructose, maltose, lactose or any mixture of mono and disaccharide from inverted sugar, glucose syrup, honey or a mixture thereof.

The sugars can also be introduced into the baked doughs according to the invention in the form of a fine crystallized sucrose powder (powdered sugar and in particular caster sugar).

The sugar derivatives can also be present in the baked doughs according to the invention. Among the best-known sugar derivatives, it is possible to cite, for example, polyols such as maltilol, sorbitol or isomalt. These derivatives are commonly used as substitutes for classic sugars due to the fact that, although they have a sweetening power inferior to that of sugars, they have the advantage of not causing cavities, and induce a lower glycemic response than do sugars.

According to a preferred embodiment, the baked doughs according to the invention include from 15 to 20% by weight of sugars and/or sugar derivatives with respect to the total weight of the baked dough. According to a preferred embodiment, the baked doughs according to the invention include less than 10% by weight of polyols with respect to the total weight of the baked dough, preferably less than 8% by weight, and more preferably less than 6% by weight.

Indeed, as indicated above, an excessive polyol content would cause adverse effects on digestion, and in particular laxative effects, which are unacceptable for the foods according to the invention.

### Fats

The baked doughs according to the invention optionally include saturated or unsaturated fats.

The term "fat" is used, in the sense of this application, as a synonym for the terms "lipid" or "oils". Fats are naturally present in numerous food constituents or products such as dairy products, cereal products and vegetables.

Fats are comprised primarily of mixtures of triglycerides, which are saturated, monounsaturated or poly-unsaturated fatty acid esters.

Saturated fatty acids, which do not contain a double bond, are present in particular in red meats and dairy products, but also in oils and refined foods in variable proportions.

*Cis* monounsaturated fatty acids are present in olive oil and olives, rapeseed oil, peanut oil and peanuts, mustard, chicken, eggs, fish, and oleaginous fruits (cashews and macadamia nuts).

*Cis* polyunsaturated fatty acids are present in certain oils (rapeseed, soybean, safflower, wheat germ oil), fish, certain oleaginous fruits and cereals.

*Trans* fatty acids result from partial hydrogenation of unsaturated fats and are easily oxidizable.

Omega-3 and omega-6 are polyunsaturated fatty acids and are classified as essential fatty acids. They are essential because the human body cannot synthesize them.

The omega-3 fatty acid group, in also denoted ω3, is present in large amounts in certain fatty fishes, flax, nuts, rapeseed and false flax.

According to a preferred embodiment, the baked doughs according to the invention include less than 5% by weight, with respect to the total weight of the baked dough, of saturated fats.

According to another preferred embodiment, the baked doughs according to the invention should not include more than 1% by weight, with respect to the total weight of the baked dough, of *trans* fatty acids.

According to an even more preferred embodiment, the baked doughs according to the invention include a content ranging from 0.1 to 1% by weight of omega-3 fatty acids, with respect to the total weight of the baked dough.

### Cereals

The baked doughs according to the invention can also include cereals.

Cereals provide the largest portion (around 45%) of the recommended daily intake of calories for people, and are also an important source of proteins.

The cereals can be chosen in particular from rice, corn, wheat, barley, oat, quinoa, rye, spelt and mixtures thereof.

Whole grains are an important source of fiber, essential fatty acids and other indispensible nutrients. Whole grains are not peeled from their external layer, which is called the pericarp or bran.

The most common whole grains include wheat, oat and brown rice.

To have a good nutritional profile, the baked doughs according to the present invention can preferably include a cereal content greater than or equal to 25% by weight, with respect to the total weight of the baked dough, and preferably 25 to 40% by weight.

### Dietary fibers

Dietary fibers are fractions of plant origin that remain non degraded by digestive enzymes. However, they are essential for proper functioning of intestinal transit.

Dietary fibers are spread among two main categories, depending on whether or not they are soluble in water.

They are found in plant foods, fruits, vegetables and cereals, in particular. Dried fruits, prunes and dried apricots are particularly rich sources.

The baked doughs according to the invention can include viscous water-soluble fibers, non-viscous water-soluble fibers and/or water-insoluble fibers, or a mixture thereof.

According to a preferred embodiment, the baked doughs according to the invention include a mixture of water-soluble fibers and/or water-insoluble fibers.

The insoluble fibers swell in water and enable, owing to their water absorption capacity, the volume of the alimentary bolus to be increased.

Insoluble fiber sources include in particular whole wheat, oats, barley, rye, rice, corn and preferably the bran of these cereals as well as fruits (such as apples, lemons, prunes, mangos, figs, etc.) or vegetables (such as tomatoes, carrots, celery, etc.) or cocoa beans.

Water-soluble fibers generating little to no increase in the viscosity of water when they are solubilized are called non-viscous soluble fibers.

Non- viscous soluble fibers can in particular have an average molar mass (or molecular weight) less than 3.10⁴ g/mol and are in particular fructo-oligosaccharides, galacto-oligosaccharides, xylo-oligosaccharides, manno-oligosaccharides, polydextrose, dextrins, cyclodextrins, or they can have a higher molar weight when they are highly branched and have a more compact size (and therefore a lower hydrodynamic volume), such as arabic gum.

Alternatively, other water-soluble fibers have the property of increasing the viscosity of water when they are solubilized in it, and are called viscous soluble fibers.

However, according to a preferred embodiment, the baked doughs according to this invention include less than 5% by weight, with respect to the total weight of the baked dough, of viscous fibers, preferably less than 3% by weight, and more preferably less than 1% by weight.

In particular, according to an especially preferred embodiment, the baked doughs according to this invention are free of viscous fibers.

The viscous soluble fibers can, for example, be chosen from guar, other galactomannans (carob gum, tara gum, fenugreek), glucomannans or konjac flour, xanthan gum, alginates, pectins, oat or barley B-glucans, wheat arabinoxylans, and chemically modified celluloses having a molar mass between 3.10⁵ and 3.10⁶ g/mol, and preferably between 5.10⁵ g/mol and 2.10⁶ g/mol.

In particular, the baked doughs according to the invention include 1% to 7% by weight of fiber, with respect to the total weight of the baked dough, and preferably 3% to 6% by weight.

### Salt

According to a particular embodiment, the baked doughs according to the invention having a good nutritional profile include less than 500 mg of sodium for 100 g of baked dough, and preferably less than 400 mg of sodium for 100 g.

### Additional ingredients

In addition to the ingredients described above, the baked doughs according to the invention can include additional ingredients commonly used in food, such as milk, eggs, emulsifiers, baking powders (such as ammonium bicarbonate, sodium bicarbonate, sodium pyrophosphate, etc.), food colours and mixtures thereof.

This invention is described in greater detail in the following examples.

### Examples 1 to 3

Three baked doughs (example 2: use according to claim 12 of the invention, and examples 1 and 3: comparative), having the following compositions, were prepared:

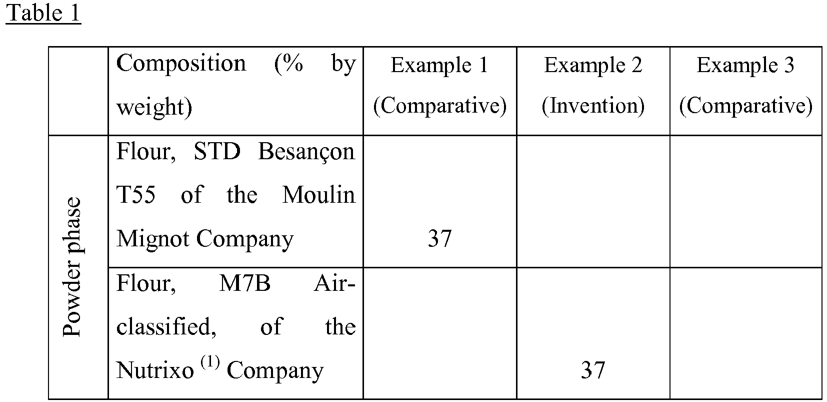

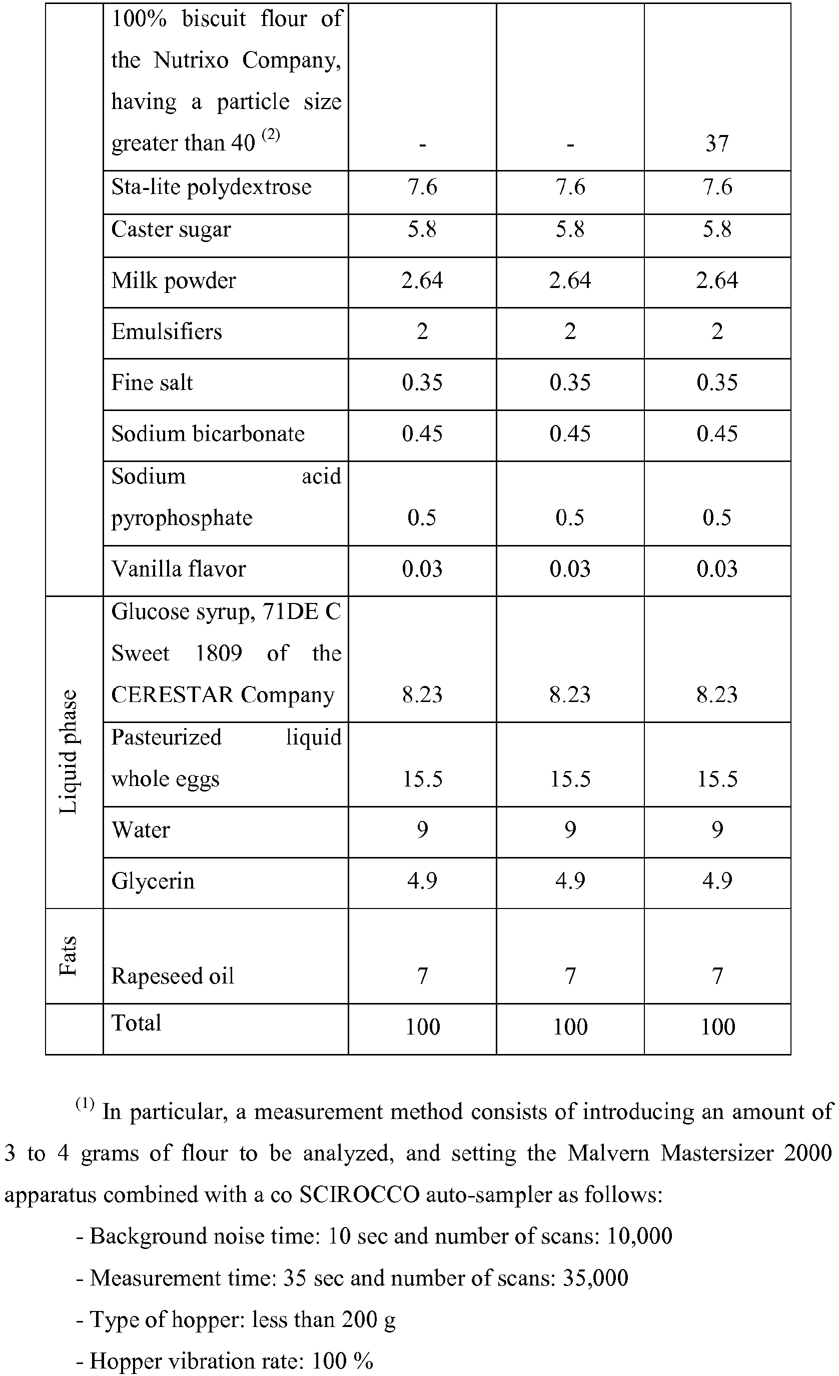

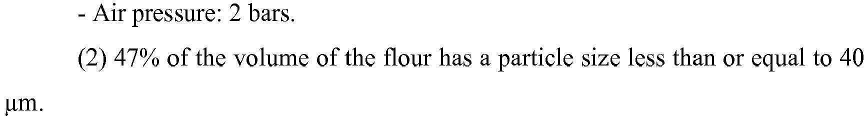

### Procedure:

Baked doughs were prepared with the compositions described above, according to the following steps:
- The dry ingredients are introduced into a Hobart mixer, equipped with a leaf-type mixer, then mixed for 2 minutes at speed 1, corresponding to a planetary movement of 48 rpm.
- The liquids are added to the mixer, mixed for 1 minute 30 seconds at speed 1, then mixed again for 1 minute 30 seconds at speed 2, corresponding to a planetary movement of 88 rpm.
- The rapeseed oil is added to the mixture obtained above and kept under agitation at speed 2 for 1 minute 30 seconds.
- The dough obtained is allowed to rest for at least 30 minutes.
- Using a pastry bag, the dough obtained above is poached into molds, each having a capacity of 25 g.
- The molds are placed in an APV-brand tunnel oven, consisting of 6 independent sections (S1 to S6) with a baking chamber 18 m long, with forced convection or DGF (Direct Gas Fire), with a "Z"-type grill strip. The oven is programmed so as to generate an adapted baking curve for 13 to 14 minutes.

**Table 2**

| | Oven inlet (S1) | S2 | S3 | S4 | S5 | Oven outlet (S6) |
|---|---|---|---|---|---|---|
| Extraction of steam | 0% | 0% | 30% | 0% | 100% | 100% |
| Temperature above the baking strip (in °C) | 160 | 160 | 160 | 185 | 130 | 130 |
| Temperature below the baking strip (in °C) | 175 | 175 | 175 | 160 | 135 | 135 |
| Type of baking | DGF | DGF | DGF | DGF | DGF | DGF |

The viscosity of the doughs presented in table 1 was measured before baking using an Anton Paar MCR300 rheometer. It was observed that the replacement of sugars with classic flours (Comparative examples 1 and 3) produced doughs having a higher viscosity than the dough of example 2 obtained by replacing sugars with an air-classified flour.

The textures of the baked doughs obtained were also compared by measuring, with the Tax-T2 penetrometer, the compression force recorded after 25% compression according to the following protocol:
- Shaving the two sides of the soft biscuit (only if it is not flat)
- Cutting a biscuit cylinder using a cookie cutter having a radius of 20 mm
- The test piece thus obtained is then compressed with the Tax-T2 to 25% compression at a speed of 0.7 mm/sec.

It was observed that, for a set compression ratio below 25%, the compression force that had to be applied on the comparative compositions of examples 1 and 3 in which the sugars were replaced by flours having a median particle size distribution by volume greater than 40 µm was greater than the compression force that had to be applied on the product of example 2. Therefore, the product of example 2 has a softer texture than the products obtained from comparative compositions 1 and 3.

Finally, the density and thickness were compared in the products obtained from the compositions of examples 1 to 3:

| | Example 1 (Comparative) | Example 2 (Invention) | Example 3 (Comparative) |
|---|---|---|---|
| Thickness (in mm) | 28.6 | 34.5 | 32.7 |
| Density | 0.255 | 0.202 | 0.266 |

The product of example 2 has a greater thickness than the other products, which means better development of the finished product. Moreover, its density is substantially lower than that of the products obtained from other compositions, indicating a lighter texture of the finished product, and again, a more developed finished product.

### Examples 4 to 8

Five baked doughs were prepared according to the use claim 12, with the following compositions:

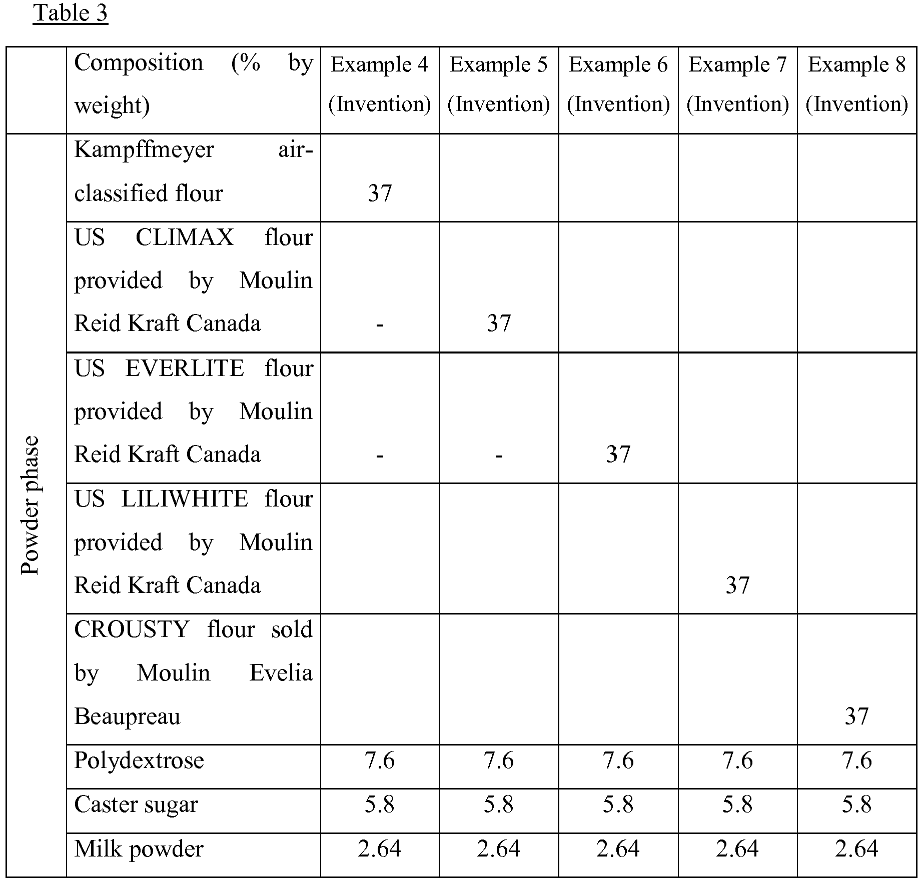

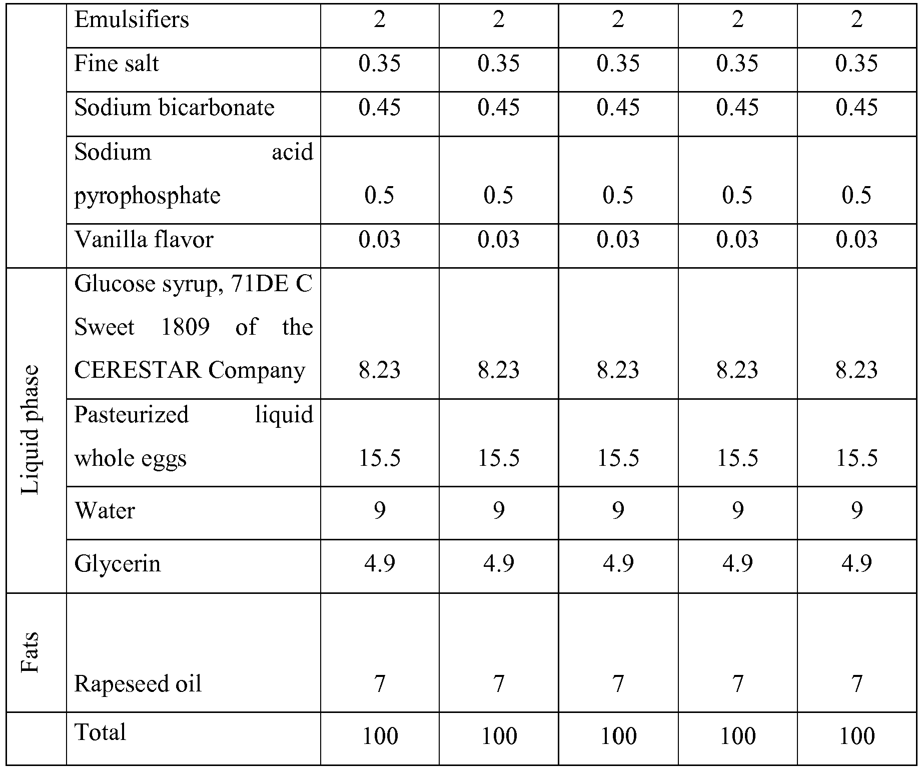

The baked doughs having the compositions described above were prepared according to the same steps as the doughs of examples 1 to 3.

The baked doughs obtained have properties similar to the baked dough of example 2, and in particular are softer than the comparative compositions of examples 1 and 3.

## Claims

1. A baked dough having a water activity (Aw) between 0.6 and 0.80 and including at least a flour having a median particulate size in volume less than or equal to 40 µm, wherein said flour excludes whole wheat flour in which the bran and the germ are not removed, and has a damaged starch content less than or equal to 6% by weight, with respect to the total weight of the dry matter of flour content, and
wherein the baked dough has a sugar and/or sugar derivative content between 15% and 25% by weight, with respect to the total weight of the dough.

2. The baked dough according to claim 1, **characterised in that** it has a water activity (Aw) between 0.6 and 0.78, preferably between 0.65 and 0.75.

3. The baked dough according to any of the preceding claims, **characterised in that** the flour has a median particulate size in volume between 10 and 40 µm, preferably between 15 and 40 µm.

4. The baked dough according to any of the preceding claims, **characterised in that** the flour has a damaged starch content from 3 to 5.5% by weight, with respect to the total weight of the dry matter of flour content, .

5. The baked dough according to any of the preceding claims, **characterised in that** the flour has a fibre content less than or equal to 5% by weight, with respect to the total weight of the dry matter of flour content, preferably from 2 to 5% by weight, and more preferably from 2.5 to 4.5% by weight.

6. The baked dough according to any of the preceding claims, **characterised in that** it has a water content in the baked dough greater than 5% by weight, with respect to the total weight of the dough, preferably between 5 and 25% by weight, and more preferably between 10 and 25% by weight.

7. The baked dough according to any of the preceding claims, **characterised in that** it has a sugar and/or sugar derivative content from 15 to 20% by weight , with respect to the total weight of the dough, .

8. The baked dough according to any of the preceding claims, **characterised in that** it is unfermented.

9. The baked dough according to any of the preceding claims, **characterised in that** it includes at least flour, eggs, sugar and optionally additional fats.

10. The baked dough according to any of the preceding claims, **characterised in that** it includes:
- at least a flour, which excludes whole wheat flour in which the bran and the germ are not removed, said flour having a median particulate size in volume less than or equal to 40 µm, a damaged starch content less than or equal to 6% by weight, with respect to the total weight of flour and a protein content less than or equal to 12% by weight, with respect to the total weight of the flour,
- between 15 to 25% by weight of sugars and/or sugar derivatives, with respect to the total weight of the baked dough,
- less than 5% by weight of saturated fats, with respect to the total weight of the baked dough,
- more than 25% by weight of cereals, with respect to the total weight of the baked dough,
- advantageously, more than 3% by weight of fibres, with respect to the total weight of the baked dough, and preferably more than 6% by weight.

11. A food product including baked dough as claimed in any of claims 1 to 10.

12. A use of a flour having a median particulate size in volume less than or equal to 40 µm as a substitute for sugars and/or sugar derivatives in dough baked or intended to be baked.

13. The use according to claim 12, **characterised in that** the baked dough is according to any of claims 1 to 10, or included in a food product according to claim 11.

## Patentansprüche

1. Gebackener Teig, der eine Wasseraktivität (Aw) zwischen 0,6 und 0,80 aufweist und mindestens ein Mehl mit einer mittleren Partikelgröße in Volumen kleiner oder gleich 40 µm beinhaltet, wobei das Mehl Vollweizenmehl ausschließt, in dem die Kleie und der Keim nicht entfernt sind, und welches einen Gehalt an beschädigter Stärke von weniger als oder gleich 6 Gew.-% bezogen auf das Gesamtgewicht der Trockenmasse des Mehlgehalts aufweist, und
wobei der gebackene Teig einen Zucker- und/oder Zuckerderivatgehalt zwischen 15 und 25 Gew.-% bezogen auf das Gesamtgewicht des Teigs aufweist.

2. Gebackener Teig nach Anspruch 1, **dadurch gekennzeichnet, dass** er eine Wasseraktivität (Aw) zwischen 0,6 und 0,78, vorzugsweise zwischen 0,65 und 0,75 aufweist.

3. Gebackener Teig nach einem der vorstehenden Ansprüche, **dadurch gekennzeichnet, dass** das Mehl eine mittlere Partikelgröße in Volumen zwischen 10 und 40 µm, vorzugsweise zwischen 15 und 40 µm, aufweist.

4. Gebackener Teig nach einem der vorstehenden Ansprüche, **dadurch gekennzeichnet, dass** das Mehl einen Gehalt an beschädigter Stärke von 3 bis 5,5 Gew.-% bezogen auf das Gesamtgewicht der Trockenmasse des Mehlgehalts aufweist.

5. Gebackener Teig nach einem der vorstehenden Ansprüche, **dadurch gekennzeichnet dass** das Mehl einen Ballaststoffgehalt von weniger als oder gleich 5 Gew.-% bezogen auf das Gesamtgewicht der Trockenmasse des Mehlgehalts, vorzugsweise von 2 bis 5 Gew.-%, und besonders bevorzugt von 2,5 bis 4,5 Gew.-% aufweist.

6. Gebackener Teig nach einem der vorstehenden Ansprüche, **dadurch gekennzeichnet, dass** er einen Wassergehalt in dem gebackenen Teig von mehr als 5 Gew.-% bezogen auf das Gesamtgewicht des Teigs, vorzugsweise zwischen 5 und 25 Gew.-%, und besonders bevorzugt zwischen 10 und 25 Gew.-% aufweist.

7. Gebackener Teig nach einem der vorstehenden Ansprüche, **dadurch gekennzeichnet, dass** er einen Zucker- und/oder Zuckerderivatgehalt von 15 bis 20 Gew.-% bezogen auf das Gesamtgewicht des Teigs aufweist.

8. Gebackener Teig nach einem der vorstehenden Ansprüche, **dadurch gekennzeichnet, dass** er nicht fermentiert ist.

9. Gebackener Teig nach einem der vorstehenden Ansprüche, **dadurch gekennzeichnet, dass** er mindestens Mehl, Eier, Zucker und wahlweise zusätzliche Fette enthält.

10. Gebackener Teig nach einem der vorstehenden Ansprüche, **dadurch gekennzeichnet, dass** er beinhaltet:
- mindestens ein Mehl, das Vollweizenmehl ausschließt, bei dem die Kleie und der Keim nicht entfernt sind, wobei das Mehl eine mittlere Partikelgröße in Volumen kleiner oder gleich 40 µm, einen Gehalt an beschädigter Stärke von kleiner oder gleich 6 Gew.-% bezogen auf das Gesamtgewicht des Mehls, und einen Proteingehalt von weniger als oder gleich 12 Gew.-% bezogen auf das Gesamtgewicht des Mehls, aufweist,
- zwischen 15 bis 25 Gew.-% Zucker und/oder Zuckerderivate bezogen auf das Gesamtgewicht des gebackenen Teigs,
- weniger als 5 Gew.-% gesättigte Fette bezogen auf das Gesamtgewicht des gebackenen Teigs,
- mehr als 25 Gew.-% Getreide bezogen auf das Gesamtgewicht des gebackenen Teigs,
- vorteilhafterweise mehr als 3 Gew.-% Ballaststoffe bezogen auf das Gesamtgewicht des gebackenen Teigs, und vorzugsweise mehr als 6 Gew. - %, aufweist.

11. Lebensmittelprodukt, gebackenen Teig nach einem der Ansprüche 1 bis 10 einschließend.

12. Verwendung eines Mehls mit einer mittleren Partikelgröße in Volumen von weniger als oder gleich 40 µm als Ersatz für Zucker und/oder Zuckerderivate in gebackenem oder zum Backen bestimmten Teig.

13. Verwendung nach Anspruch 12, **dadurch gekennzeichnet, dass** der gebackene Teig nach einem der Ansprüche 1 bis 10 vorliegt, oder in einem Nahrungsmittelprodukt gemäß Anspruch 11 enthalten ist.

## Revendications

1. Pâte cuite présentant une activité de l'eau (Aw) entre 0,6 et 0,80 et comprenant au moins une farine ayant une granulométrie médiane en volume inférieure ou égale à 40 µm, dans laquelle ladite farine exclut la farine de blé complet dans laquelle le son et le germe ne sont pas éliminés, et présente une teneur en amidon endommagé inférieure ou égale à 6 % en poids, par rapport au poids total de la teneur en matière sèche de la farine, et
dans laquelle la pâte cuite comprend une teneur en sucres et/ou en dérivés de sucre entre 15 % et 25 % en poids, par rapport au poids total de la pâte.

2. Pâte cuite selon la revendication 1, **caractérisée en ce qu'**elle présente une activité de l'eau (Aw) entre 0,6 et 0,78, de préférence entre 0,65 et 0,75.

3. Pâte cuite selon l'une quelconque des revendications précédentes, **caractérisée en ce que** la farine présente une granulométrie médiane en volume entre 10 et 40 µm, de préférence entre 15 et 40 µm.

4. Pâte cuite selon l'une quelconque des revendications précédentes, **caractérisée en ce que** la farine présente une teneur en amidon endommagé allant de 3 à 5,5 % en poids, par rapport au poids total de la teneur en matière sèche de la farine.

5. Pâte cuite selon l'une quelconque des revendications précédentes, **caractérisée en ce que** la farine présente une teneur en fibres inférieure ou égale à 5 % en poids, par rapport au poids total de la teneur en matière sèche de la farine, de préférence de 2 à 5 % en poids, et plus préférablement de 2,5 à 4,5 % en poids.

6. Pâte cuite selon l'une quelconque des revendications précédentes, **caractérisée en ce qu'**elle présente une teneur en eau dans la pâte cuite supérieure à 5 % en poids, par rapport au poids total de la pâte, de préférence entre 5 et 25 % en poids, et plus préférablement entre 10 et 25 % en poids.

7. Pâte cuite selon l'une quelconque des revendications précédentes, **caractérisée en ce qu'**elle présente une teneur en sucres et/ou en dérivés de sucre allant de 15 à 20 % en poids, par rapport au poids total de la pâte.

8. Pâte cuite selon l'une quelconque des revendications précédentes, **caractérisée en ce qu'**elle est non fermentée.

9. Pâte cuite selon l'une quelconque des revendications précédentes, **caractérisée en ce qu'**elle inclut au moins de la farine, des oeufs, du sucre et éventuellement des matières grasses additionnelles.

10. Pâte cuite selon l'une quelconque des revendications précédentes, **caractérisée en ce qu'**elle comprend :
- au moins une farine, qui exclut la farine de blé complet dans laquelle le son et le germe ne sont pas éliminés, ladite farine présentant une granulométrie médiane en volume inférieure ou égale à 40 µm, une teneur en amidon endommagé inférieure ou égale à 6 % en poids, par rapport au poids total de la farine et une teneur en protéines inférieure ou égale à 12 % en poids, par rapport au poids total de la farine,
- entre 15 et 25 % en poids de sucres et/ou de dérivés de sucre, par rapport au poids total de la pâte cuite,
- moins de 5 % en poids de matières grasses saturées, par rapport au poids total de la pâte cuite,
- plus de 25 % en poids de céréales, par rapport au poids total de la pâte cuite,
- avantageusement, plus de 3 % en poids de fibres, par rapport au poids total de la pâte cuite et, de préférence, plus de 6 % en poids.

11. Produit alimentaire comprenant une pâte cuite selon l'une quelconque des revendications 1 à 10.

12. Utilisation d'une farine ayant une granulométrie médiane en volume inférieure ou égale à 40 µm pour substituer les sucres et/ou des dérivés de sucre dans des pâtes cuites ou destinées à être cuites.

13. Utilisation selon la revendication 12, **caractérisée en ce que** la pâte cuite est selon l'une quelconque des revendications 1 à 10, ou comprises dans un produit alimentaire selon la revendication 11.
